# EUROPEAN PATENT SPECIFICATION

(11) **EP 1 353 462 B1**
(45) Date of publication and mention of the grant of the patent: **26.05.2010**
(21) Application number: 03003399.7
(22) Date of filing: 14.02.2003
(51) Int. Cl.: H04J 3/06, H04L 1/00, H04N 7/52

(54) **Jitter buffer and lost-frame-recovery interworking**
Jitterpuffer und Zwischenfunktion zur Wiederherstellung verlorener Rahmen
Tampon de gigue et interfonctionnement de récupération de trames perdues

(30) Priority: 15.02.2002 US 77405
(43) Date of publication of application: 15.10.2003
(73) Proprietor: Broadcom Corporation, Irvine, CA 92617 (US)
(72) Inventor: LeBlanc, Wilfred, V6E 1J9 Vancouver, B.C., (CA)
(74) Representative: Jehle, Volker Armin

(56) References cited:
- WO-A-01/22710
- US-A- 5 623 483
- MONTGOMERY W A: "TECHNIQUES FOR PACKET VOICE SYNCHRONIZATION" 1 December 1983 (1983-12-01), IEEE JOURNAL ON SELECTED AREAS IN COMMUNICATIONS, IEEE INC. NEW YORK, US, PAGE(S) 1022-1028 , XP000563228 ISSN: 0733-8716 * the whole document *

## Description

### FIELD OF THE INVENTION

The present invention relates generally to telecommunications systems, and more particularly, to a system for interfacing telephony devices with packet-based networks.

### BACKGROUND OF THE INVENTION

Telephony devices, such as telephones, analog fax machines, and data modems, have traditionally utilized circuit-switched networks to communicate. With the current state of technology, it is desirable for telephony devices to communicate over the Internet, or other packet-based networks. Heretofore, an integrated system for interfacing various telephony devices over packet-based networks has been difficult due to the different modulation schemes of the telephony devices. Accordingly, it would be advantageous to have an efficient and robust integrated system for the exchange of voice, fax data and modem data between telephony devices and packet-based networks.

In a packet voice network, the packets traverse the network with random delays. At the decoder, a jitter buffer works to equalize the random delays. It is known in the art to estimate lost frames based on previous frames. Due to large packetization intervals, a single lost packet may result in large temporal losses of 30-80 msec of speech. This has an impact on the lost frame recovery, which typically begins to mute the recovered speech after about 40 msec.

WO 01/22710 A describes a voice and data exchange over a packet based network like VoIP wherein a de-packetizing engine and a voice synchronizer are utilized. The voice synchronizer manages the asynchronous arrival of voice packets. The voice queue having sufficient memory to store the largest possible delay variation is used to process voice packets which arrive asynchronously. Further, the synchronizer comprises a jitter buffer wherein the synchronizer estimates how long the first voice frame of the talk spurt should be held. If underflow occurs, the holding time should be increased. Furthermore, disclosed that the voice synchronizer is adaptive rather than fixed based upon a worst case delay variation.

US 5 623 483 relates to a network data stream synchronization method and system. Operating delay and loss parameters are accepted and a data stream buffer is initialized. The network delay experienced by a data packet is determined and a buffer delay is imposed to provide a fixed end-to-end delay. Packets arriving too late to be played within the fixed end-to-end delay are discarded. Network delay models may be updated and clock drifts may be detected and compensated for using historical buffer data.

### SUMMARY OF THE INVENTION

One aspect of the description is directed to a method of processing a digital media data stream sent by a transmitting end. Pursuant to the method, the data stream is received and each data element that is received prior to a predetermined playout deadline is held in a buffer until the playout deadline, at which time the data element is released for playout. The loss rate at which data elements in the data stream are not received by their respective playout deadlines is monitored. The time interval extending from the time a data element is sent by the transmitting end to the playout deadline is adjusted based upon the loss rate.

Another aspect of the present invention is directed to a method of estimating an unreceived data element of a transmitted digital media data stream made up of a stream of data elements. Pursuant to the method, a subsequent data element that follows the unreceived data element in the data stream is received. A parameter of the unreceived data element is estimated based on the received subsequent data element. In one embodiment, each received data element is held in a buffer until a prescribed playout deadline, at which time the data element is released for playout. A loss rate at which data elements in the data stream are not received by their respective playout deadlines is monitored. A time interval extending from the time a data element is sent by a transmitting end to the playout deadline is adjusted based upon the loss rate.

According to an aspect of the invention, a method of estimating an unreceived data element of a transmitted digital media data stream comprising a stream of data elements is provided, the method comprising steps of:
(a) receiving, by an adaptive jitter buffer, a subsequent data element that follows the unreceived data element in the data stream; and
(b) estimating, by the adaptive jitter buffer, a parameter of the unreceived data element based on the received subsequent data element.

The method comprises receiving a plurality of subsequent data elements that follow the unreceived data element in the data stream, and wherein estimating step (b) comprises estimating a parameter of the unreceived data element based on the received subsequent data elements.

Advantageously, the method further comprises a step (c) of:
(c) holding received data elements in a buffer.

Advantageously, holding step (c) comprises holding each received data element in the buffer until an end of a time period, at which time the data element is released for playout.

Advantageously, the method further comprises steps of:
(d) monitoring a loss rate at which data elements in the data stream are not received by the end of their respective time periods; and
(e) adjusting a duration of the time period based upon the loss rate.

Advantageously, adjusting step (e) comprises increasing the duration of the time period if the loss rate is above a first threshold.

Advantageously, adjusting step (e) comprises increasing the duration of the time period by an amount that is substantially equivalent to a duration of the media represented by an integer number of data elements if the loss rate is above the first threshold.

Advantageously, adjusting step (e) further comprises decreasing the duration of the time period if the loss rate is below a second threshold that is lower than the first threshold.

Advantageously, the time period begins for each transmitted data element when the data element is sent by a transmitting end. Avantageously, the data elements are frames of encoded data.

Yet another aspect of the present invention is directed to a system for estimating an unreceived data element of a transmitted digital media data stream made up of a stream of data elements. The system includes a jitter buffer and a lost data element recovery mechanism. The jitter buffer receives a transmitted digital media data stream and holds each received data element until a prescribed playout deadline, at which time the data element is released for playout. The lost data element recovery mechanism estimates a parameter of an unreceived data element based on a received subsequent data element that follows the unreceived data element in the data stream. In one embodiment, the system also includes a controller that monitors a loss rate at which data elements in the data stream are not received at the jitter buffer by their respective playout deadlines. The controller adjusts a time interval extending from the time a data element is sent by a transmitting end to the playout deadline based upon the loss rate.

It is understood that other embodiments of the present invention will become readily apparent to those skilled in the art from the following detailed description, wherein embodiments of the invention are shown and described only by way of illustration of the best modes contemplated for carrying out the invention.

### DESCRIPTION OF THE DRAWINGS

These and other features, aspects, and advantages of the present invention will become better understood with regard to the following description, appended claims, and accompanying drawings where:
FIG. 1 is a block diagram of a packet-based infrastructure providing a communication medium with a number of telephony devices in accordance with a preferred embodiment of the present invention.
FIG. 1A is a block diagram of a packet-based infrastructure providing a communication medium with a number of telephony devices.
FIG. 2 is a block diagram of a signal processing system implemented with a programmable digital signal processor (DSP) software architecture.
FIG. 3 is a block diagram of the software architecture operating on the DSP platform of FIG. 2.
FIG. 4 is a state machine diagram of the operational modes of a virtual device driver for packet-based network applications.
FIG. 5 is a block diagram of several signal processing systems in the voice mode for interfacing between a switched circuit network and a packet-based network.
FIG. 6 is a system block diagram of a signal processing system operating in a voice mode.
FIG. 7 is a block diagram of the voice decoder and the lost packet recovery engine.
FIG. 8 is a flow chart representing a method of estimating an unreceived data element of a transmitted digital media data stream.
FIG. 9 is a flow chart representing a method of processing a digital media data stream.
FIG. 10 is a flow chart representing a method of adjusting the data element holding time based on the data element loss rate.

### DETAILED DESCRIPTION

An Embodiment of a Signal Processing System

In a preferred embodiment of the present invention, a signal processing system is employed to interface telephony devices with packet-based networks. Telephony devices include, by way of example, analog and digital phones, ethernet phones, Internet Protocol phones, fax machines, data modems, cable modems, interactive voice response systems, PBXs, key systems, and any other conventional telephony devices known in the art. The described preferred embodiment of the signal processing system can be implemented with a variety of technologies including, by way of example, embedded communications software that enables transmission of information, including voice, fax and modem data over packet-based networks. The embedded communications software is preferably run on programmable digital signal processors (DSPs) and is used in gateways, cable modems, remote access servers, PBXs, and other packet-based network appliances.

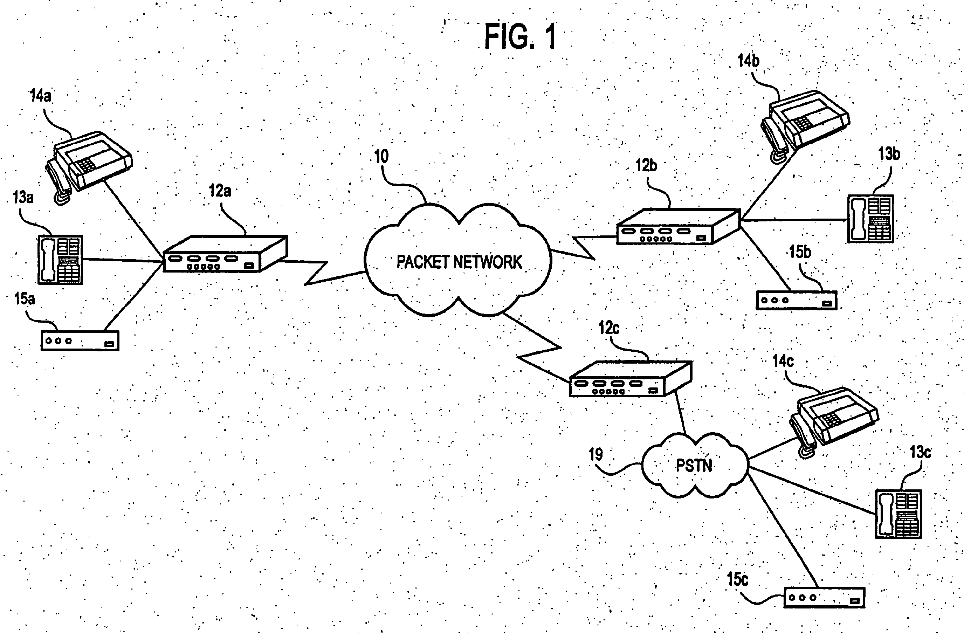

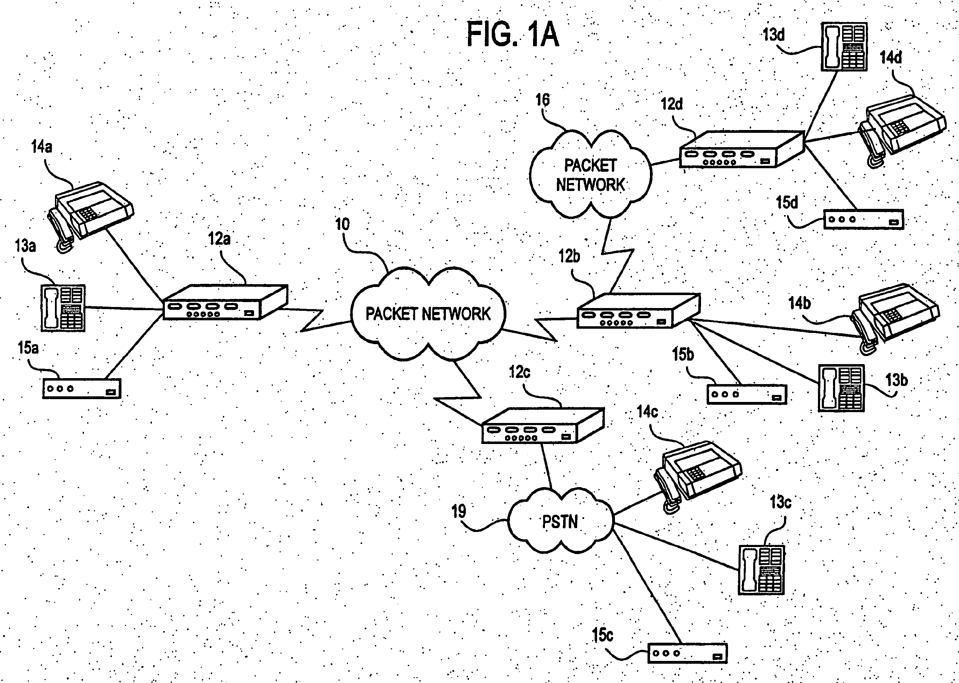

An exemplary topology is shown in FIG. 1 with a packet-based network 10 providing a communication medium between various telephony devices. Each network gateway 12a, 12b, 12c includes a signal processing system which provides an interface between the packet-based network 10 and a number of telephony devices. In the described exemplary embodiment, each network gateway 12a, 12b, 12c supports a fax machine 14a, 14b, 14c, a telephone 13a, 13b, 13c, and a modem 15a, 15b, 15c. As will be appreciated by those skilled in the art, each network gateway 12a, 12b, 12c could support a variety of different telephony arrangements. By way of example, each network gateway might support any number telephony devices and/or circuit-switched / packet-based networks including, among others, analog telephones, ethernet phones, fax machines, data modems, PSTN lines (Public Switching Telephone Network), ISDN lines (Integrated Services Digital Network), T1 systems, PBXs, key systems, or any other conventional telephony device and/or circuit-switched/ packet-based network. In the described exemplary embodiment, two of the network gateways 12a, 12b provide a direct interface between their respective telephony devices and the packet-based network 10. The other network gateway 12c is connected to its respective telephony device through a PSTN 19. The network gateways 12a, 12b, 12c permit voice, fax and modem data to be carried over packet-based networks such as PCs running through a USB (Universal Serial Bus) or an asynchronous serial interface, Local Area Networks (LAN) such as Ethernet, Wide Area Networks (WAN) such as Internet Protocol (IP), Frame Relay (FR), Asynchronous Transfer Mode (ATM), Public Digital Cellular Network such as TDMA (IS-13x), CDMA (IS-9x) or GSM for terrestrial wireless applications, or any other packet-based system.

Another exemplary topology is shown in FIG. 1A. The topology of FIG. 1A is similar to that of FIG. 1 but includes a second packet-based network 16 that is connected to packet-based network 10 and to telephony devices 13b, 14b and 15b via network gateway 12b. The signal processing system of network gateway 12b provides an interface between packet-based network 10 and packet-based network 16 in addition to an interface between packet-based networks 10, 16 and telephony devices 13b, 14b and 15b. Network gateway 12d includes a signal processing system which provides an interface between packet-based network 16 and fax machine 14d, telephone 13d, and modem 15d.

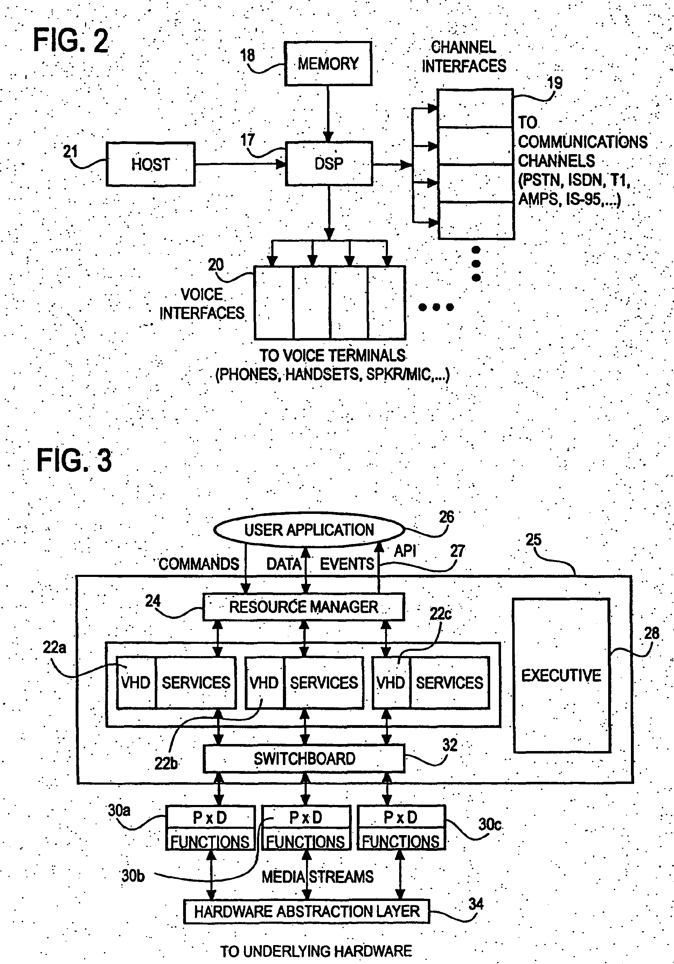

The exemplary signal processing system can be implemented with a programmable DSP software architecture as shown in FIG. 2. This architecture has a DSP 17 with memory 18 at the core, a number of network channel interfaces 19 and telephony interfaces 20, and a host 21 that may reside in the DSP itself or on a separate microcontroller. The network channel interfaces 19 provide multi-channel access to the packet-based network. The telephony interfaces 23 can be connected to a circuit-switched network interface such as a PSTN system, or directly to any telephony device. The programmable DSP is effectively hidden within the embedded communications software layer. The software layer binds all core DSP algorithms together, interfaces the DSP hardware to the host, and provides low-level services such as the allocation of resources to allow higher level software programs to run.

An exemplary multi-layer software architecture operating on a DSP platform is shown in FIG. 3. A user application layer 26 provides overall executive control and system management, and directly interfaces a DSP server 25 to the host 21 (see to FIG. 2). The DSP server 25 provides DSP resource management and telecommunications signal processing. Operating below the DSP server layer are a number of physical devices (PXD) 30a, 30b, 30c. Each PXD provides an interface between the DSP server 25 and an external telephony device (not shown) via a hardware abstraction layer (HAL) 34.

The DSP server 25 includes a resource manager 24 which receives commands from, forwards events to, and exchanges data with the user application layer 26. The user application layer 26 can either be resident on the DSP 17 or alternatively on the host 21 (see FIG. 2), such as a microcontroller. An application programming interface 27 (API) provides a software interface between the user application layer 26 and the resource manager 24. The resource manager 24 manages the internal / external program and data memory of the DSP 17. In addition the resource manager dynamically allocates DSP resources, performs command routing as well as other general purpose functions.

The DSP server 25 also includes virtual device drivers (VHDs) 22a, 22b, 22c. The VHDs are a collection of software objects that control the operation of and provide the facility for real time signal processing. Each VHD 22a, 22b, 22c includes an inbound and outbound media queue (not shown) and a library of signal processing services specific to that VHD 22a, 22b, 22c. In the described exemplary embodiment, each VHD 22a, 22b, 22c is a complete self-contained software module for processing a single channel with a number of different telephony devices. Multiple channel capability can be achieved by adding VHDs to the DSP server 25. The resource manager 24 dynamically controls the creation and deletion of VHDs and services.

A switchboard 32 in the DSP server 25 dynamically inter-connects the PXDs 30a, 30b, 30c with the VHDs 22a, 22b, 22c. Each PXD 30a, 30b, 30c is a collection of software objects which provide signal conditioning for one external telephony device. For example, a PXD may provide volume and gain control for signals from a telephony device prior to communication with the switchboard 32. Multiple telephony functionalities can be supported on a single channel by connecting multiple PXDs, one for each telephony device, to a single VHD via the switchboard 32. Connections within the switchboard 32 are managed by the user application layer 26 via a set of API commands to the resource manager 24. The number of PXDs and VHDs is expandable, and limited only by the memory size and the MIPS (millions instructions per second) of the underlying hardware.

A hardware abstraction layer (HAL) 34 interfaces directly with the underlying DSP 17 hardware (see FIG. 2) and exchanges telephony signals between the external telephony devices and the PXDs. The HAL 34 includes basic hardware interface routines, including DSP initialization, target hardware control, codec sampling, and hardware control interface routines. The DSP initialization routine is invoked by the user application layer 26 to initiate the initialization of the signal processing system. The DSP initialization sets up the internal registers of the signal processing system for memory organization, interrupt handling, timer initialization, and DSP configuration. Target hardware initialization involves the initialization of all hardware devices and circuits external to the signal processing system. The HAL 34 is a physical firmware layer that isolates the communications software from the underlying hardware. This methodology allows the communications software to be ported to various hardware platforms by porting only the affected portions of the HAL 34 to the target hardware.

The exemplary software architecture described above can be integrated into numerous telecommunications products. In an exemplary embodiment, the software architecture is designed to support telephony signals between telephony devices (and/or circuit-switched networks) and packet-based networks. A network VHD (NetVHD) is used to provide a single channel of operation and provide the signal processing services for transparently managing voice, fax, and modem data across a variety of packet-based networks. More particularly, the NetVHD encodes and packetizes DTMF, voice, fax, and modem data received from various telephony devices and/or circuit-switched networks and transmits the packets to the user application layer. In addition, the NetVHD disassembles DTMF, voice, fax, and modem data from the user application layer, decodes the packets into signals, and transmits the signals to the circuit-switched network or device.

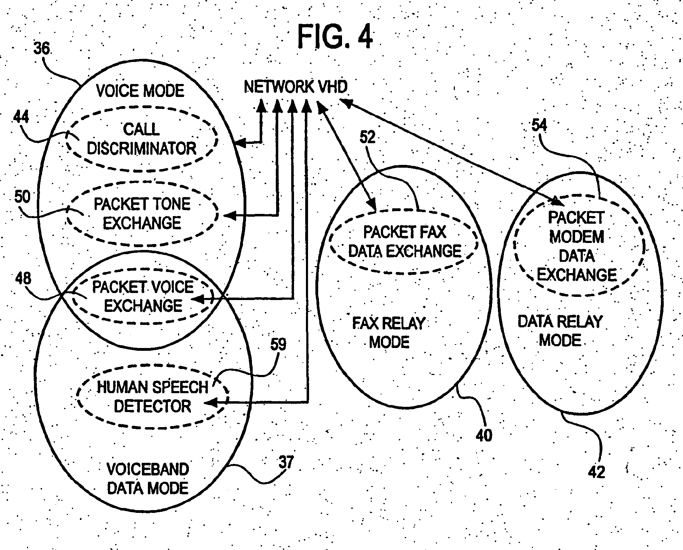

An exemplary embodiment of the NetVHD operating in the described software architecture is shown in FIG. 4. The NetVHD includes four operational modes, namely voice mode 36, voiceband data mode 37, fax relay mode 40, and data relay mode 42. In each operational mode, the resource manager invokes various services. For example, in the voice mode 36, the resource manager invokes call discrimination 44, packet voice exchange 48, and packet tone exchange 50. The packet voice exchange 48 may employ numerous voice compression algorithms, including, among others, Linear 128 kbps, G.711 u-law/A-law 64 kbps (ITU Recommendation G.711 (1988) - Pulse code modulation (PCM) of voice frequencies), G.726 16/24/32/40 kbps (ITU Recommendation G.726 (12/90) - 40, 32, 24, 16 kbit/s Adaptive Differential Pulse Code Modulation (ADPCM)), G.729A 8 kbps (Annex A (11/96) to ITU Recommendation G.729 - Coding of speech at 8 kbit/s using conjugate structure algebraic-code-excited linear-prediction (CS-ACELP) B Annex A: Reduced complexity 8 kbit/s CS-ACELP speech codec), and G.723 5.3/6.3 kbps (ITU Recommendation G.723.1 (03/96) - Dual rate coder for multimedia communications transmitting at 5.3 and 6.3 kbit/s). The contents of each of the foregoing ITU Recommendations being incorporated herein by reference as if set forth in full. The packet voice exchange 48 is common to both the voice mode 36 and the voiceband data mode 37. In the voiceband data mode 37, the resource manager invokes the packet voice exchange 48 for exchanging transparently data without modification (other than packetization) between the telephony device (or circuit-switched network) and the packet-based network. This is typically used for the exchange of fax and modem data when bandwidth concerns are minimal as an alternative to demodulation and remodulation. During the voiceband data mode 37, the human speech detector service 59 is also invoked by the resource manager. The human speech detector 59 monitors the signal from the near end telephony device for speech. In the event that speech is detected by the human speech detector 59, an event is forwarded to the resource manager which, in turn, causes the resource manager to terminate the human speech detector service 59 and invoke the appropriate services for the voice mode 36 (i.e., the call discriminator, the packet tone exchange, and the packet voice exchange).

In the fax relay mode 40, the resource manager invokes a fax exchange 52 service. The packet fax exchange 52 may employ various data pumps including, among others, V.17 which can operate up to 14,400 bits per second, V.29 which uses a 1700-Hz carrier that is varied in both phase and amplitude, resulting in 16 combinations of 8 phases and 4 amplitudes which can operate up to 9600 bits per second, and V.27ter which can operate up to 4800 bits per second. Likewise, the resource manager invokes a packet data exchange 54 service in the data relay mode 42. The packet data exchange 52 may employ various data pumps including, among others, V.22bis/V.22 with data rates up to 2400 bits per second, V.32bis/V.32 which enables full-duplex transmission at 14,400 bits per second, and V.34 which operates up to 33,600 bits per second. The ITU Recommendations setting forth the standards for the foregoing data pumps are incorporated herein by reference as if set forth in full.

In the described exemplary embodiment, the user application layer does not need to manage any service directly. The user application layer manages the session using high-level commands directed to the NetVHD, which in turn directly runs the services. However, the user application layer can access more detailed parameters of any service if necessary to change, by way of example, default functions for any particular application.

In operation, the user application layer opens the NetVHD and connects it to the appropriate PXD. The user application then may configure various operational parameters of the NetVHD, including, among others, default voice compression (Linear, G.711, G.726, G.723.1, G.723.1A, G.729A, G.729B), fax data pump (Binary, V.17, V.29, V.27ter), and modem data pump (Binary, V.22bis, V.32bis, V.34). The user application layer then loads an appropriate signaling service (not shown) into the NetVHD, configures it and sets the NetVHD to the On-hook state.

In response to events from the signaling service (not shown) via a near end telephony device (hookswitch), or signal packets from the far end, the user application will set the NetVHD to the appropriate off-hook state, typically voice mode. In an exemplary embodiment, if the signaling service event is triggered by the near end telephony device, the packet tone exchange will generate dial tone. Once a DTMF tone is detected, the dial tone is terminated. The DTMF tones are packetized and forwarded to the user application layer for transmission on the packet-based network. The packet tone exchange could also play ringing tone back to the near end telephony device (when a far end telephony device is being rung), and a busy tone if the far end telephony device is unavailable. Other tones may also be supported to indicate all circuits are busy, or an invalid sequence of DTMF digits were entered on the near end telephony device.

Once a connection is made between the near end and far end telephony devices, the call discriminator is responsible for differentiating between a voice and machine call by detecting the presence of a 2100 Hz. tone (as in the case when the telephony device is a fax or a modem), a 1100 Hz. tone or V.21 modulated high level data link control (HDLC) flags (as in the case when the telephony device is a fax). If a 1100 Hz. tone, or V.21 modulated HDLC flags are detected, a calling fax machine is recognized. The NetVHD then terminates the voice mode 36 and invokes the packet fax exchange to process the call. If however, 2100 Hz tone is detected, the NetVHD terminates voice mode and invokes the packet data exchange.

The packet data exchange service further differentiates between a fax and modem by continuing to monitor the incoming signal for V.21 modulated HDLC flags, which if present, indicate that a fax connection is in progress. If HDLC flags are detected, the NetVHD terminates packet data exchange service and initiates packet fax exchange service. Otherwise, the packet data exchange service remains operative. In the absence of an 1100 or 2100 Hz. tone, or V.21 modulated HDLC flags the voice mode remains operative.

### The Voice Mode

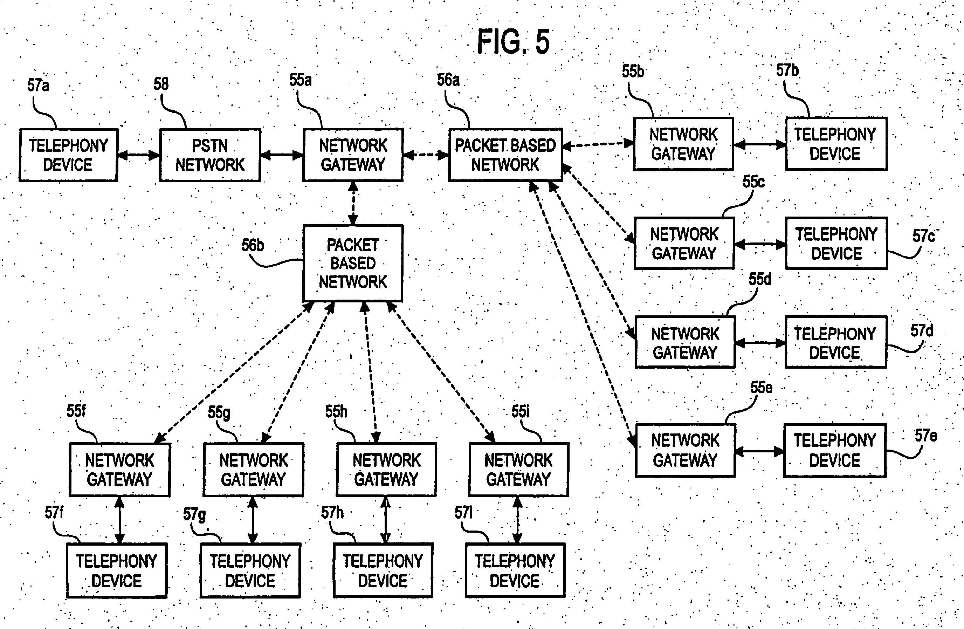

Voice mode provides signal processing of voice signals. As shown in the exemplary embodiment depicted in FIG. 5, voice mode enables the transmission of voice over a packet-based system such as Voice over IP (VoIP, H.323), Voice over Frame Relay (VoFR, FRF-11), Voice Telephony over ATM (VTOA), or any other proprietary network. The voice mode should also permit voice to be carried over traditional media such as time division multiplex (TDM) networks and voice storage and playback systems. Network gateway 55a supports the exchange of voice between a traditional circuit-switched network 58 and packet-based networks 56(a) and 56(b). Network gateways 55b, 55c, 55d, 55e support the exchange of voice between packet-based network 56a and a number of telephony devices 57b, 57c, 57d, 57e. In addition, network gateways 55f, 55g, 55h, 55i support the exchange of voice between packet-based network 56b and telephony devices 57f, 57g, 57h, 57i. Telephony devices 57a, 57b, 57c, 57d, 57e, 55f, 55g, 55h, 55i can be any type of telephony device including telephones, facsimile machines and modems.

The PXDs for the voice mode provide echo cancellation, gain, and automatic gain control. The network VHD invokes numerous services in the voice mode including call discrimination, packet voice exchange, and packet tone exchange. These network VHD services operate together to provide: (1) an encoder system with DTMF detection, call progress tone detection, voice activity detection, voice compression, and comfort noise estimation, and (2) a decoder system with delay compensation, voice decoding, DTMF generation, comfort noise generation and lost frame recovery.

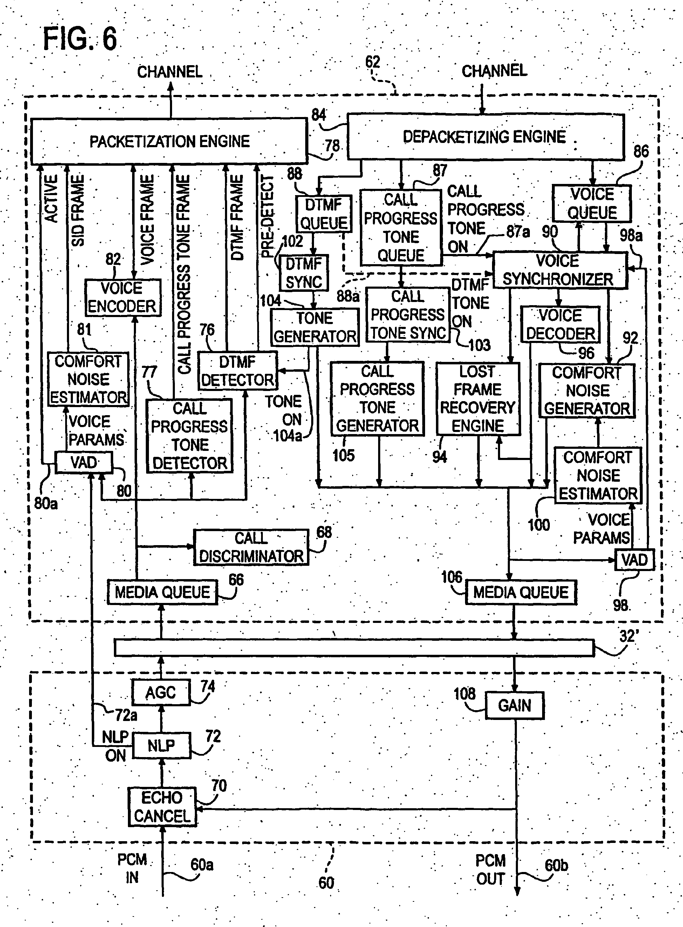

The services invoked by the network VHD in the voice mode and the associated PXD is shown schematically in FIG. 6. In the described exemplary embodiment, the PXD 60 provides two way communication with a telephone or a circuit-switched network, such as a PSTN line (e.g. DS0) carrying a 64kb/s pulse code modulated (PCM) signal, i.e., digital voice samples.

The incoming PCM signal 60a is initially processed by the PXD 60 to remove far end echoes that might otherwise be transmitted back to the far end user. As the name implies, echoes in telephone systems is the return of the talker's voice resulting from the operation of the hybrid with its two-four wire conversion. If there is low end-to-end delay, echo from the far end is equivalent to side-tone (echo from the near-end), and therefore, not a problem. Side-tone gives users feedback as to how loud they are talking, and indeed, without side-tone, users tend to talk too loud. However, far end echo delays of more than about 10 to 30 msec significantly degrade the voice quality and are a major annoyance to the user.

An echo canceller 70 is used to remove echoes from far end speech present on the incoming PCM signal 60a before routing the incoming PCM signal 60a back to the far end user. The echo canceller 70 samples an outgoing PCM signal 60b from the far end user, filters it, and combines it with the incoming PCM signal 60a. Preferably, the echo canceller 70 is followed by a non-linear processor (NLP) 72 which may mute the digital voice samples when far end speech is detected in the absence of near end speech. The echo canceller 70 may also inject comfort noise which in the absence of near end speech may be roughly at the same level as the true background noise or at a fixed level.

After echo cancellation, the power level of the digital voice samples is normalized by an automatic gain control (AGC) 74 to ensure that the conversation is of an acceptable loudness. Alternatively, the AGC can be performed before the echo canceller 70. However, this approach would entail a more complex design because the gain would also have to be applied to the sampled outgoing PCM signal 60b. In the described exemplary embodiment, the AGC 74 is designed to adapt slowly, although it should adapt fairly quickly if overflow or clipping is detected. The AGC adaptation should be held fixed if the NLP 72 is activated.

After AGC, the digital voice samples are placed in the media queue 66 in the network VHD 62 via the switchboard 32'. In the voice mode, the network VHD 62 invokes three services, namely call discrimination, packet voice exchange, and packet tone exchange. The call discriminator 68 analyzes the digital voice samples from the media queue to determine whether a 2100 Hz tone, a 1100 Hz tone or V.21 modulated HDLC flags are present. As described above with reference to FIG. 4, if either tone or HDLC flags are detected, the voice mode services are terminated and the appropriate service for fax or modem operation is initiated. In the absence of a 2100 Hz tone, a 1100 Hz tone, or HDLC flags, the digital voice samples are coupled to the encoder system which includes a voice encoder 82, a voice activity detector (VAD) 80, a comfort noise estimator 81, a DTMF detector 76, a call progress tone detector 77 and a packetization engine 78.

Typical telephone conversations have as much as sixty percent silence or inactive content. Therefore, high bandwidth gains can be realized if digital voice samples are suppressed during these periods. A VAD 80, operating under the packet voice exchange, is used to accomplish this function. The VAD 80 attempts to detect digital voice samples that do not contain active speech. During periods of inactive speech, the comfort noise estimator 81 couples silence identifier (SID) packets to a packetization engine 78. The SID packets contain voice parameters that allow the reconstruction of the background noise at the far end.

From a system point of view, the VAD 80 may be sensitive to the change in the NLP 72. For example, when the NLP 72 is activated, the VAD 80 may immediately declare that voice is inactive. In that instance, the VAD 80 may have problems tracking the true background noise level. If the echo canceller 70 generates comfort noise during periods of inactive speech, it may have a different spectral characteristic from the true background noise. The VAD 80 may detect a change in noise character when the NLP 72 is activated (or deactivated) and declare the comfort noise as active speech. For these reasons, the VAD 80 should be disabled when the NLP 72 is activated. This is accomplished by a "NLP on" message 72a passed from the NLP 72 to the VAD 80.

The voice encoder 82, operating under the packet voice exchange, can be a straight 16 bit PCM encoder or any voice encoder which supports one or more of the standards promulgated by ITU. The encoded digital voice samples are formatted into a voice packet (or packets) by the packetization engine 78. These voice packets are formatted according to an applications protocol and outputted to the host (not shown). The voice encoder 82 is invoked only when digital voice samples with speech are detected by the VAD 80. Since the packetization interval may be a multiple of an encoding interval, both the VAD 80 and the packetization engine 78 should cooperate to decide whether or not the voice encoder 82 is invoked. For example, if the packetization interval is 10 msec and the encoder interval is 5 msec (a frame of digital voice samples is 5 ms), then a frame containing active speech should cause the subsequent frame to be placed in the 10 ms packet regardless of the VAD state during that subsequent frame. This interaction can be accomplished by the VAD 80 passing an "active" flag 80a to the packetization engine 78, and the packetization engine 78 controlling whether or not the voice encoder 82 is invoked.

In the described exemplary embodiment, the VAD 80 is applied after the AGC 74. This approach provides optimal flexibility because both the VAD 80 and the voice encoder 82 are integrated into some speech compression schemes such as those promulgated in ITU Recommendations G.729 with Annex B VAD (March 1996) - Coding of Speech at 8 kbits/s Using Conjugate-Structure Algebraic-Code-Exited Linear Prediction (CS-ACELP), and G.723.1 with Annex A VAD (March 1996) - Dual Rate Coder for Multimedia Communications Transmitting at 5.3 and 6.3 kbit/s, the contents of which is hereby incorporated by reference as through set forth in full herein.

Operating under the packet tone exchange, a DTMF detector 76 determines whether or not there is a DTMF signal present at the near end. The DTMF detector 76 also provides a pre-detection flag 76a which indicates whether or not it is likely that the digital voice sample might be a portion of a DTMF signal. If so, the pre-detection flag 76a is relayed to the packetization engine 78 instructing it to begin holding voice packets. If the DTMF detector 76 ultimately detects a DTMF signal, the voice packets are discarded, and the DTMF signal is coupled to the packetization engine 78. Otherwise the voice packets are ultimately released from the packetization engine 78 to the host (not shown). The benefit of this method is that there is only a temporary impact on voice packet delay when a DTMF signal is pre-detected in error, and not a constant buffering delay. Whether voice packets are held while the pre-detection flag 76a is active could be adaptively controlled by the user application layer.

Similarly, a call progress tone detector 77 also operates under the packet tone exchange to determine whether a precise signaling tone is present at the near end. Call progress tones are those which indicate what is happening to dialed phone calls. Conditions like busy line, ringing called party, bad number, and others each have distinctive tone frequencies and cadences assigned them. The call progress tone detector 77 monitors the call progress state, and forwards a call progress tone signal to the packetization engine to be packetized and transmitted across the packet based network. The call progress tone detector may also provide information regarding the near end hook status which is relevant to the signal processing tasks. If the hook status is on hook, the VAD should preferably mark all frames as inactive, DTMF detection should be disabled, and SID packets should only be transferred if they are required to keep the connection alive.

The decoding system of the network VHD 62 essentially performs the inverse operation of the encoding system. The decoding system of the network VHD 62 comprises a depacketizing engine 84, a voice queue 86, a DTMF queue 88, a precision tone queue 87, a voice synchronizer 90, a DTMF synchronizer 102, a precision tone synchronizer 103, a voice decoder 96, a VAD 98, a comfort noise estimator 100, a comfort noise generator 92, a lost packet recovery engine 94, a tone generator 104, and a precision tone generator 105.

The depacketizing engine 84 identifies the type of packets received from the host (i.e., voice packet, DTMF packet, call progress tone packet, SID packet), transforms them into frames which are protocol independent. The depacketizing engine 84 then transfers the voice frames (or voice parameters in the case of SID packets) into the voice queue 86, transfers the DTMF frames into the DTMF queue 88 and transfers the call progress tones into the call progress tone queue 87. In this manner, the remaining tasks are, by and large, protocol independent.

A jitter buffer is utilized to compensate for network impairments such as delay jitter caused by packets not arriving with the same relative timing in which they were transmitted. In addition, the jitter buffer compensates for lost packets that occur on occasion when the network is heavily congested. In the described exemplary embodiment, the jitter buffer for voice includes a voice synchronizer 90 that operates in conjunction with a voice queue 86 to provide an isochronous stream of voice frames to the voice decoder 96.

Sequence numbers embedded into the voice packets at the far end can be used to detect lost packets, packets arriving out of order, and short silence periods. The voice synchronizer 90 can analyze the sequence numbers, enabling the comfort noise generator 92 during short silence periods and performing voice frame repeats via the lost packet recovery engine 94 when voice packets are lost. SID packets can also be used as an indicator of silent periods causing the voice synchronizer 90 to enable the comfort noise generator 92. Otherwise, during far end active speech, the voice synchronizer 90 couples voice frames from the voice queue 86 in an isochronous stream to the voice decoder 96. The voice decoder 96 decodes the voice frames into digital voice samples suitable for transmission on a circuit switched network, such as a 64kb/s PCM signal for a PSTN line. The output of the voice decoder 96 (or the comfort noise generator 92 or lost packet recovery engine 94 if enabled) is written into a media queue 106 for transmission to the PXD 60.

The comfort noise generator 92 provides background noise to the near end user during silent periods. If the protocol supports SID packets, (and these are supported for VTOA, FRF-11, and VoIP), the comfort noise estimator at the far end encoding system should transmit SID packets. Then, the background noise can be reconstructed by the near end comfort noise generator 92 from the voice parameters in the SID packets buffered in the voice queue 86. However, for some protocols, namely, FRF-11, the SID packets are optional, and other far end users may not support SID packets at all. In these systems, the voice synchronizer 90 must continue to operate properly. In the absence of SID packets, the voice parameters of the background noise at the far end can be determined by running the VAD 98 at the voice decoder 96 in series with a comfort noise estimator 100.

Preferably, the voice synchronizer 90 is not dependent upon sequence numbers embedded in the voice packet. The voice synchronizer 90 can invoke a number of mechanisms to compensate for delay jitter in these systems. For example, the voice synchronizer 90 can assume that the voice queue 86 is in an underflow condition due to excess jitter and perform packet repeats by enabling the lost frame recovery engine 94. Alternatively, the VAD 98 at the voice decoder 96 can be used to estimate whether or not the underflow of the voice queue 86 was due to the onset of a silence period or due to packet loss. In this instance, the spectrum and/or the energy of the digital voice samples can be estimated and the result 98a fed back to the voice synchronizer 90. The voice synchronizer 90 can then invoke the lost packet recovery engine 94 during voice packet losses and the comfort noise generator 92 during silent periods.

When DTMF packets arrive, they are depacketized by the depacketizing engine 84. DTMF frames at the output of the depacketizing engine 84 are written into the DTMF queue 88. The DTMF synchronizer 102 couples the DTMF frames from the DTMF queue 88 to the tone generator 104. Much like the voice synchronizer, the DTMF synchronizer 102 is employed to provide an isochronous stream of DTMF frames to the tone generator 104. Generally speaking, when DTMF packets are being transferred, voice frames should be suppressed. To some extent, this is protocol dependent. However, the capability to flush the voice queue 86 to ensure that the voice frames do not interfere with DTMF generation is desirable. Essentially, old voice frames which may be queued are discarded when DTMF packets arrive. This will ensure that there is a significant gap before DTMF tones are generated. This is achieved by a "tone present" message 88a passed between the DTMF queue and the voice synchronizer 90.

The tone generator 104 converts the DTMF signals into a DTMF tone suitable for a standard digital or analog telephone. The tone generator 104 overwrites the media queue 106 to prevent leakage through the voice path and to ensure that the DTMF tones are not too noisy.

There is also a possibility that DTMF tone may be fed back as an echo into the DTMF detector 76. To prevent false detection, the DTMF detector 76 can be disabled entirely (or disabled only for the digit being generated) during DTMF tone generation. This is achieved by a "tone on" message 104a passed between the tone generator 104 and the DTMF detector 76. Alternatively, the NLP 72 can be activated while generating DTMF tones.

When call progress tone packets arrive, they are depacketized by the depacketizing engine 84. Call progress tone frames at the output of the depacketizing engine 84 are written into the call progress tone queue 87. The call progress tone synchronizer 103 couples the call progress tone frames from the call progress tone queue 87 to a call progress tone generator 105. Much like the DTMF synchronizer, the call progress tone synchronizer 103 is employed to provide an isochronous stream of call progress tone frames to the call progress tone generator 105. And much like the DTMF tone generator; when call progress tone packets are being transferred, voice frames should be suppressed. To some extent, this is protocol dependent. However, the capability to flush the voice queue 86 to ensure that the voice frames do not interfere with call progress tone generation is desirable. Essentially, old voice frames which may be queued are discarded when call progress tone packets arrive to ensure that there is a significant inter-digit gap before call progress tones are generated. This is achieved by a "tone present" message 87a passed between the call progress tone queue 87 and the voice synchronizer 90.

The call progress tone generator 105 converts the call progress tone signals into a call progress tone suitable for a standard digital or analog telephone. The call progress tone generator 105 overwrites the media queue 106 to prevent leakage through the voice path and to ensure that the call progress tones are not too noisy.

The outgoing PCM signal in the media queue 106 is coupled to the PXD 60 via the switchboard 32'. The outgoing PCM signal is coupled to an amplifier 108 before being outputted on the PCM output line 60b.

The outgoing PCM signal in the media queue 106 is coupled to the PXD 60 via the switchboard 32'. The outgoing PCM signal is coupled to an amplifier 108 before being outputted on the PCM output line 60b.

### 1. Voice Encoder/Voice Decoder

The purpose of voice compression algorithms is to represent voice with highest efficiency (i.e., highest quality of the reconstructed signal using the least number of bits). Efficient voice compression was made possible by research starting in the 1930's that demonstrated that voice could be characterized by a set of slowly varying parameters that could later be used to reconstruct an approximately matching voice signal. Characteristics of voice perception allow for lossy compression without perceptible loss of quality.

Voice compression begins with an analog-to-digital converter that samples the analog voice at an appropriate rate (usually 8,000 samples per second for telephone bandwidth voice) and then represents the amplitude of each sample as a binary code that is transmitted in a serial fashion. In communications systems, this coding scheme is called pulse code modulation (PCM).

When using a uniform (linear) quantizer in which there is uniform separation between amplitude levels. This voice compression algorithm is referred to as "linear," or "linear PCM." Linear PCM is the simplest and most natural method of quantization. The drawback is that the signal-to-noise ratio (SNR) varies with the amplitude of the voice sample. This can be substantially avoided by using non-uniform quantization known as companded PCM.

In companded PCM, the voice sample is compressed to logarithmic scale before transmission, and expanded upon reception. This conversion to logarithmic scale ensures that low-amplitude voice signals are quantized with a minimum loss of fidelity, and the SNR is more uniform across all amplitudes of the voice sample. The process of compressing and expanding the signal is known as "companding" (COMpressing and exPANDing). There exists a worldwide standard for companded PCM defined by the CCITT (the International Telegraph and Telephone Consultative Committee).

The CCITT is a Geneva-based division of the International Telecommunications Union (ITU), a New York-based United Nations organization. The CCITT is now formally known as the ITU-T, the telecommunications sector of the ITU, but the term CCITT is still widely used. Among the tasks of the CCITT is the study of technical and operating issues and releasing recommendations on them with a view to standardizing telecommunications on a worldwide basis. A subset of these standards is the G-Series Recommendations, which deal with the subject of transmission systems and media, and digital systems and networks. Since 1972, there have been a number of G-Series Recommendations on speech coding, the earliest being Recommendation G.711. G.711 has the best voice quality of the compression algorithms but the highest bit rate requirement.

The ITU-T defined the "first" voice compression algorithm for digital telephony in 1972. It is companded PCM defined in Recommendation G.711. This Recommendation constitutes the principal reference as far as transmission systems are concerned. The basic principle of the G.711 companded PCM algorithm is to compress voice using 8 bits per sample, the voice being sampled at 8 kHz, keeping the telephony bandwidth of 300-3400 Hz. With this combination, each voice channel requires 64 kilobits per second.

Note that when the term PCM is used in digital telephony, it usually refers to the companded PCM specified in Recommendation G.711, and not linear PCM, since most transmission systems transfer data in the companded PCM format. Companded PCM is currently the most common digitization scheme used in telephone networks. Today, nearly every telephone call in North America is encoded at some point along the way using G.711 companded PCM.

ITU Recommendation G.726 specifies a multiple-rate ADPCM compression technique for converting 64 kilobit per second companded PCM channels (specified by Recommendation G.711) to and from a 40, 32, 24, or 16 kilobit per second channel. The bit rates of 40, 32, 24, and 16 kilobits per second correspond to 5, 4, 3, and 2 bits per voice sample.

ADPCM is a combination of two methods: Adaptive Pulse Code Modulation (APCM), and Differential Pulse Code Modulation (DPCM). Adaptive Pulse Code Modulation can be used in both uniform and non-uniform quantizer systems. It adjusts the step size of the quantizer as the voice samples change, so that variations in amplitude of the voice samples, as well as transitions between voiced and unvoiced segments, can be accommodated. In DPCM systems, the main idea is to quantize the difference between contiguous voice samples. The difference is calculated by subtracting the current voice sample from a signal estimate predicted from previous voice sample. This involves maintaining an adaptive predictor (which is linear, since it only uses first-order functions of past values). The variance of the difference signal results in more efficient quantization (the signal can be compressed coded with fewer bits).

The G.726 algorithm reduces the bit rate required to transmit intelligible voice, allowing for more channels. The bit rates of 40, 32, 24, and 16 kilobits per second correspond to compression ratios of 1.6:1, 2:1, 2.67:1, and 4:1 with respect to 64 kilobits per second companded PCM. Both G.711 and G.726 are waveform encoders; they can be used to reduce the bit rate require to transfer any waveform, like voice, and low bit-rate modem signals, while maintaining an acceptable level of quality.

There exists another class of voice encoders, which model the excitation of the vocal tract to reconstruct a waveform that appears very similar when heard by the human ear, although it may be quite different from the original voice signal. These voice encoders, called vocoders, offer greater voice compression while maintaining good voice quality, at the penalty of higher computational complexity and increased delay.

For the reduction in bit rate over G.711, one pays for an increase in computational complexity. Among voice encoders, the G.726 ADPCM algorithm ranks low to medium on a relative scale of complexity, with companded PCM being of the lowest complexity and code-excited linear prediction (CELP) vocoder algorithms being of the highest.

The G.726 ADPCM algorithm is a sample-based encoder like the G.711 algorithm, therefore, the algorithmic delay is limited to one sample interval. The CELP algorithms operate on blocks of samples (0.625ms to 30 ms for the ITU coder), so the delay they incur is much greater.

The quality of G.726 is best for the two highest bit rates, although it is not as good as that achieved using companded PCM. The quality at 16 kilobits per second is quite poor (a noticeable amount of noise is introduced), and should normally be used only for short periods when it is necessary to conserve network bandwidth (overload situations).

The G.726 interface specifies as input to the G.726 encoder (and output to the G.726 decoder) an 8-bit companded PCM sample according to Recommendation G.711. So strictly speaking, the G.726 algorithm is a transcoder, taking log-PCM and converting it to ADPCM, and vice-versa. Upon input of a companded PCM sample, the G.726 encoder converts it to a 14-bit linear PCM representation for intermediate processing. Similarly, the decoder converts an intermediate 14-bit linear PCM value into an 8-bit companded PCM sample before it is output. An extension of the G.726 algorithm was carried out in 1994 to include, as an option, 14-bit linear PCM input signals and output signals. The specification for such a linear interface is given in Annex A of Recommendation G.726.

The interface specified by G.726 Annex A bypasses the input and output companded PCM conversions. The effect of removing the companded PCM encoding and decoding is to decrease the coding degradation introduced by the compression and expansion of the linear PCM samples.

The algorithm implemented in the described exemplary embodiment can be the version specified in G.726 Annex A, commonly referred to as G.726A, or any other voice compression algorithm known in the art. Among these voice compression algorithms are those standardized for telephony by the ITU-T. Several of these algorithms operate at a sampling rate of 8000 Hz. with different bit rates for transmitting the encoded voice. By way of example, Recommendations G.729 (1996) and G.723.1 (1996) define code excited linear prediction (CELP) algorithms that provide even lower bit rates than G.711 and G.726. G.729 operates at 8 kbps and G.723.1 operates at either 5.3 kbps or 6.3 kbps.

In an exemplary embodiment, the voice encoder and the voice decoder support one or more voice compression algorithms, including but not limited to, 16 bit PCM (non-standard, and only used for diagnostic purposes); ITU-T standard G.711 at 64 kb/s; G.723.1 at 5.3 kb/s (ACELP) and 6.3 kb/s (MP-MLQ); ITU-T standard G.726 (ADPCM) at 16, 24, 32, and 40 kb/s; ITU-T standard G.727 (Embedded ADPCM) at 16, 24, 32, and 40 kb/s; ITU-T standard G.728 (LD-CELP) at 16 kb/s; and ITU-T standard G.729 Annex A (CS-ACELP) at 8 kb/s.

The packetization interval for 16 bit PCM, G.711, G.726, G.727 and G.728 should be a multiple of 5 msec in accordance with industry standards. The packetization interval is the time duration of the digital voice samples that are encapsulated into a single voice packet. The voice encoder (decoder) interval is the time duration in which the voice encoder (decoder) is enabled. The packetization interval should be an integer multiple of the voice encoder (decoder) interval (a frame of digital voice samples). By way of example, G.729 encodes frames containing 80 digital voice samples at 8 kHz which is equivalent to a voice encoder (decoder) interval of 10 msec. If two subsequent encoded frames of digital voice sample are collected and transmitted in a single packet, the packetization interval in this case would be 20 msec.

G.711, G.726, and G.727 encodes digital voice samples on a sample by sample basis. Hence, the minimum voice encoder (decoder) interval is 0.125 msec. This is somewhat of a short voice encoder (decoder) interval, especially if the packetization interval is a multiple of 5 msec. Therefore, a single voice packet will contain 40 frames of digital voice samples. G.728 encodes frames containing 5 digital voice samples (or 0.625 msec). A packetization interval of 5 msec (40 samples) can be supported by 8 frames of digital voice samples. G.723.1 compresses frames containing 240 digital voice samples. The voice encoder (decoder) interval is 30 msec, and the packetization interval should be a multiple of 30 msec.

Packetization intervals which are not multiples of the voice encoder (or decoder) interval can be supported by a change to the packetization engine or the depacketization engine. This may be acceptable for a voice encoder (or decoder) such as G.711 or 16 bit PCM.

The G.728 standard may be desirable for some applications. G.728 is used fairly extensively in proprietary voice conferencing situations and it is a good trade-off between bandwidth and quality at a rate of 16 kb/s. Its quality is superior to that of G.729 under many conditions, and it has a much lower rate than G.726 or G.727. However, G.728 is MIPS intensive.

Differentiation of various voice encoders (or decoders) may come at a reduced complexity. By way of example, both G.723.1 and G.729 could be modified to reduce complexity, enhance performance, or reduce possible IPR conflicts. Performance may be enhanced by using the voice encoder (or decoder) as an embedded coder. For example, the "core" voice encoder (or decoder) could be G.723.1 operating at 5.3 kb/s with "enhancement" information added to improve the voice quality. The enhancement information may be discarded at the source or at any point in the network, with the quality reverting to that of the "core" voice encoder (or decoder). Embedded coders may be readily implemented since they are based on a given core. Embedded coders are rate scalable, and are well suited for packet based networks. If a higher quality 16 kb/s voice encoder (or decoder) is required, one could use G.723.1 or G.729 Annex A at the core, with an extension to scale the rate up to 16 kb/s (or whatever rate was desired).

The configurable parameters for each voice encoder or decoder include the rate at which it operates (if applicable), which companding scheme to use, the packetization interval, and the core rate if the voice encoder (or decoder) is an embedded coder. For G.727, the configuration is in terms of bits/sample. For example EADPCM(5,2) (Embedded ADPCM, G.727) has a bit rate of 40 kb/s (5 bits/sample) with the core information having a rate of 16 kb/s (2 bits/sample).

### 2. Packetization Engine

In an exemplary embodiment, the packetization engine groups voice frames from the voice encoder, and with information from the VAD, creates voice packets in a format appropriate for the packet based network. The two primary voice packet formats are generic voice packets and SID packets. The format of each voice packet is a function of the voice encoder used, the selected packetization interval, and the protocol.

Those skilled in the art will readily recognize that the packetization engine could be implemented in the host. However, this may unnecessarily burden the host with configuration and protocol details, and therefore, if a complete self contained signal processing system is desired, then the packetization engine should be operated in the network VHD. Furthermore, there is significant interaction between the voice encoder, the VAD, and the packetization engine, which further promotes the desirability of operating the packetization engine in the network VHD .

The packetization engine may generate the entire voice packet or just the voice portion of the voice packet. In particular, a fully packetized system with all the protocol headers may be implemented, or alternatively, only the voice portion of the packet will be delivered to the host. By way of example, for VoIP, it is reasonable to create the real-time transport protocol (RTP) encapsulated packet with the packetization engine, but have the remaining transmission control protocol / Internet protocol (TCP/IP) stack residing in the host. In the described exemplary embodiment, the voice packetization functions reside in the packetization engine. The voice packet should be formatted according to the particular standard, although not all headers or all components of the header need to be constructed.

### 3. Voice Depacketizing Engine /Voice Queue

In an exemplary embodiment, voice de-packetization and queuing is a real time task which queues the voice packets with a time stamp indicating the arrival time. The voice queue should accurately identify packet arrival time within one msec resolution. Resolution should preferably not be less than the encoding interval of the far end voice encoder. The depacketizing engine should have the capability to process voice packets that arrive out of order, and to dynamically switch between voice encoding methods (i.e. between, for example, G.723.1 and G.711). Voice packets should be queued such that it is easy to identify the voice frame to be released, and easy to determine when voice packets have been lost or discarded en route.

The voice queue may require significant memory to queue the voice packets. By way of example, if G.711 is used, and the worst-case delay variation is 250 msec, the voice queue should be capable of storing up to 500 msec of voice frames. At a data rate of 64 kb/s this translates into 4000 bytes or, or 2K (16 bit) words of storage. Similarly, for 16 bit PCM, 500 msec of voice frames require 4K words. Limiting the amount of memory required may limit the worst case delay variation of 16 bit PCM and possibly G.711. This, however, depends on how the voice frames are queued, and whether dynamic memory allocation is used to allocate the memory for the voice frames. Thus, it is preferable to optimize the memory allocation of the voice queue.

The voice queue transforms the voice packets into frames of digital voice samples. If the voice packets are at the fundamental encoding interval of the voice frames, then the delay jitter problem is simplified. In an exemplary embodiment, a double voice queue is used. The double voice queue includes a secondary queue which time stamps and temporarily holds the voice packets, and a primary queue which holds the voice packets, time stamps, and sequence numbers. The voice packets in the secondary queue are disassembled before transmission to the primary queue. The secondary queue stores packets in a format specific to the particular protocol, whereas the primary queue stores the packets in a format which is largely independent of the particular protocol.

In practice, it is often the case that sequence numbers are included with the voice packets, but not the SID packets, or a sequence number on a SID packet is identical to the sequence number of a previously received voice packet. Similarly, SID packets may or may not contain useful information. For these reasons, it may be useful to have a separate queue for received SID packets.

The depacketizing engine is preferably configured to support VoIP, VTOA, VoFR and other proprietary protocols. The voice queue should be memory efficient, while providing the ability to handle dynamically switched voice encoders (at the far end), allow efficient reordering of voice packets (used for VoIP) and properly identify lost packets.

### 4. Voice Synchronization

In an exemplary embodiment, the voice synchronizer analyzes the contents of the voice queue and determines when to release voice frames to the voice decoder, when to play comfort noise, when to perform frame repeats (to cope with lost voice packets or to extend the depth of the voice queue), and when to perform frame deletes (in order to decrease the size of the voice queue). The voice synchronizer manages the asynchronous arrival of voice packets. For those embodiments that are not memory limited, a voice queue with sufficient fixed memory to store the largest possible delay variation is used to process voice packets which arrive asynchronously. Such an embodiment includes sequence numbers to identify the relative timings of the voice packets. The voice synchronizer should ensure that the voice frames from the voice queue can be reconstructed into high quality voice, while minimizing the end-to-end delay. These are competing objectives so the voice synchronizer should be configured to provide system trade-off between voice quality and delay.

Preferably, the voice synchronizer is adaptive rather than fixed based upon the worst-case delay variation. This is especially true in cases such as VoIP where the worst-case delay variation can be on the order of a few seconds. By way of example, consider a VoIP system with a fixed voice synchronizer based on a worst-case delay variation of 300 msec. If the actual delay variation is 280 msec, the signal processing system operates as expected. However, if the actual delay variation is 20 msec, then the end -to-end delay is at least 280 msec greater than required. In this case the voice quality should be acceptable, but the delay would be undesirable. On the other hand, if the delay variation is 330 msec then an underflow condition could exist degrading the voice quality of the signal processing system.

The voice synchronizer performs four primary tasks. First, the voice synchronizer determines when to release the first voice frame of a talk spurt from the far end. Subsequent to the release of the first voice frame, the remaining voice frames are released in an isochronous manner. In an exemplary embodiment, the first voice frame is held for a period of time that is equal or less than the estimated worst-case jitter.

Second, the voice synchronizer estimates how long the first voice frame of the talk spurt should be held. If the voice synchronizer underestimates the required "target holding time," jitter buffer underflow will likely result. However, jitter buffer underflow could also occur at the end of a talk spurt, or during a short silence interval. Therefore, SID packets and sequence numbers could be used to identify what caused the jitter buffer underflow, and whether the target holding time should be increased. If the voice synchronizer overestimates the required "target holding time," all voice frames will be held too long causing jitter buffer overflow. In response to jitter buffer overflow, the target holding time should be decreased. In the described exemplary embodiment, the voice synchronizer increases the target holding time rapidly for jitter buffer underflow due to excessive jitter, but decreases the target holding time slowly when holding times are excessive. This approach allows rapid adjustments for voice quality problems while being more forgiving for excess delays of voice packets.

Thirdly, the voice synchronizer provides a methodology by which frame repeats and frame deletes are performed within the voice decoder. Estimated jitter is only utilized to determine when to release the first frame of a talk spurt. Therefore, changes in the delay variation during the transmission of a long talk spurt must be independently monitored. On buffer underflow (an indication that delay variation is increasing), the voice synchronizer instructs the lost frame recovery engine to issue voice frames repeats. In particular, the frame repeat command instructs the lost frame recovery engine to utilize the parameters from the previous voice frame to estimate the parameters of the current voice frame. Thus, if frames 1, 2 and 3 are normally transmitted and frame 3 arrives late, frame repeat is issued after frame number 2, and if frame number 3 arrives during this period, it is then transmitted. The sequence would be frames 1,2, a frame repeat of frame 2 and then frame 3. Performing frame repeats causes the delay to increase, which increasing the size of the jitter buffer to cope with increasing delay characteristics during long talk spurts. Frame repeats are also issued to replace voice frames that are lost en route.

Conversely, if the holding time is too large due to decreasing delay variation, the speed at which voice frames are released should be increased. Typically, the target holding time can be adjusted, which automatically compresses the following silent interval. However, during a long talk spurt, it may be necessary to decrease the holding time more rapidly to minimize the excessive end to end delay. This can be accomplished by passing two voice frames to the voice decoder in one decoding interval but only one of the voice frames is transferred to the media queue.

The voice synchronizer must also function under conditions of severe buffer overflow, where the physical memory of the signal processing system is insufficient due to excessive delay variation. When subjected to severe buffer overflow, the voice synchronizer could simply discard voice frames.

The voice synchronizer should operate with or without sequence numbers, time stamps, and SID packets. The voice synchronizer should also operate with voice packets arriving out of order and lost voice packets. In addition, the voice synchronizer preferably provides a variety of configuration parameters which can be specified by the host for optimum performance, including minimum and maximum target holding time. With these two parameters, it is possible to use a fully adaptive jitter buffer by setting the minimum target holding time to zero msec and the maximum target holding time to 500 msec (or the limit imposed due to memory constraints). Although the preferred voice synchronizer is fully adaptive and able to adapt to varying network conditions, those skilled in the art will appreciate that the voice synchronizer can also be maintained at a fixed holding time by setting the minimum and maximum holding times to be equal.

### 5. Lost Packet Recovery/Frame Deletion

In applications where voice is transmitted through a packet based network there are instances where not all of the packets reach the intended destination. The voice packets may either arrive too late to be sequenced properly or may be lost entirely. These losses may be caused by network congestion, delays in processing or a shortage of processing cycles. The packet loss can make the voice difficult to understand or annoying to listen to.

Packet recovery refers to methods used to hide the distortions caused by the loss of voice packets. In the described exemplary embodiment, a lost packet recovery engine is implemented whereby missing voice is filled with synthesized voice using the linear predictive coding model of speech. The voice is modelled using the pitch and spectral information from digital voice samples received prior to the lost packets.

The lost packet recovery engine, in accordance with an exemplary embodiment, can be completely contained in the decoder system. The algorithm uses previous and/or future digital voice samples or a parametric representation thereof, to estimate the contents of lost packets when they occur.

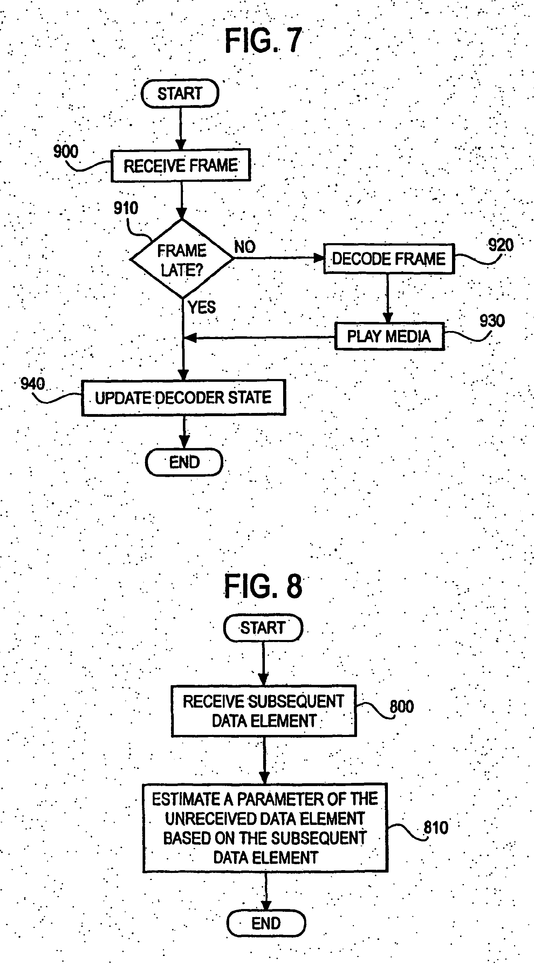

FIG. 7 shows a block diagram of the voice decoder and the lost packet recovery engine. The lost packet recovery engine includes a voice analyzer 192, a voice synthesizer 194 and a selector 196. During periods of no packet loss, the voice analyzer 192 buffers digital voice samples from the voice decoder 96.

When a packet loss occurs, the voice analyzer 192 generates voice parameters from the buffered digital voice samples. The voice parameters are used by the voice synthesizer 194 to synthesize voice until the voice decoder 96 receives a voice packet, or a timeout period has elapsed. During voice syntheses, a "packet lost" signal is applied to the selector to output the synthesized voice as digital voice samples to the media queue (not shown). The voice analyzer may also use a parametric representation of the voice samples from previous or future frames. If future voice frames are available then the voice synthesizer is effectively predicting the current (lost) speech frame based on subsequent speech packets.

### g. Backward and Forward Estimation

According to an embodiment of the present invention, when a data element, such as a frame or a packet, is lost (i.e., not received by its playout deadline), received data elements that are subsequent to the lost data element in the data stream sequence are used to estimate the parameters of the lost data element. This process will be referred to herein as backward prediction. FIG. 8 is a flow chart representing a method of estimating an unreceived data element of a transmitted digital media data stream according to an illustrative embodiment of the present invention. At step 800, a subsequent data element that follows the unreceived data element in the data stream is received. At step 810, a parameter of the unreceived data element is estimated based on the received subsequent data element. In an illustrative embodiment, a parameter of the unreceived data element is estimated based on a plurality of received subsequent data elements. Parameters that can be estimated using such backward prediction according to the present invention include, but are not limited to, the gain, pitch, excitation and spectral information of an audio sample. In one embodiment of the present invention, each received data element is held in a jitter buffer, such as the jitter buffer constituted by voice queue 86 and voice synchronizer 90 of FIG. 6, until a prescribed playout deadline, at which time the data element is released to the decoder 96 for playout.

Alternatively, as an example, forward prediction is used in conjunction with backward prediction to estimate the parameter or parameters of the lost data element. Forward prediction is the estimation of the lost data element using prior data elements that precede the unreceived data element in the data stream. Better performance can be achieved using both forward and backward prediction as opposed to using forward prediction alone or backward prediction alone.

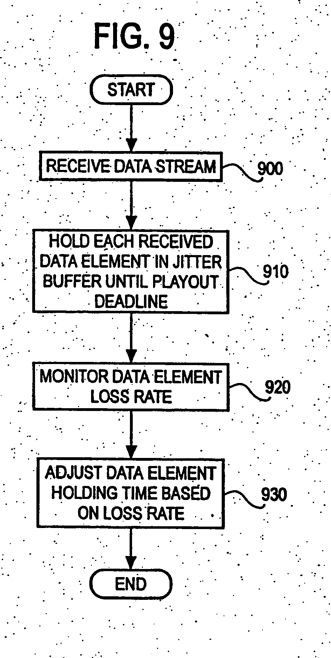

In an illustrative embodiment of the present invention, the end-to-end delay, and therefore the jitter buffer target holding time, is conditionally adjusted based on lost frame statistics. FIG. 9 is a flow chart representing a method of processing a digital media data stream according to an illustrative embodiment of the present invention. At step 900, the data stream is received. At step 910, each data element that is received prior to a predetermined playout deadline is held in a jitter buffer until the playout deadline, at which time the data element is released for playout. At step 920, the loss rate at which data elements in the data stream are not received by their respective playout deadlines is monitored by a controller. Illustratively, the lost data element statistics are estimated by calculating a lost data element rate over a prescribed interval, for example, 10-30 seconds. In an exemplary embodiment, this is done by counting the losses over such a period by considering sequence number anomalies at the decoder 96. In an alternative embodiment, the lost data element rate is calculated using a filter with a relatively long time constant. At step 930, the time interval extending from the time a data element is sent by the transmitting end to the playout deadline (the end-to-end delay) is adjusted based upon the loss rate. Another way of stating this is that the jitter buffer target holding times are adjusted. That is, the time that a received data element is held in the jitter buffer, as measured from the time the data element was sent, is adjusted. In an illustrative embodiment, the jitter buffer target hold time is conditionally increased based on lost data element statistics. With higher hold times, it is more likely that data elements after the lost data element will be available, and these subsequent data elements can be used in backward prediction to predict previous data elements.

In an illustrative embodiment of the present invention, adjusting step 930 comprises increasing the jitter buffer target holding time if the loss rate is above a predetermined threshold. In one embodiment, the target holding time is increased by an amount that is substantially equivalent to the duration of the media represented by an integer number of data elements. In one embodiment, the target holding time is increased by an amount that is substantially equivalent to the duration of the media represented by one data element. In another embodiment, the target hold time is set at a first value if the loss rate is relatively low, and the hold time is set at a second value, greater than the first value, if the loss rate is relatively higher. In another embodiment, the target hold time is decreased if the loss rate is relatively low, and increased if the loss rate is relatively higher.

In another embodiment of the present invention, if the loss rate is lower than a predetermined threshold, the jitter buffer target holding time is maintained at a present duration, while if the loss rate is greater than or equal to the threshold, the target holding time is increased by a predetermined amount. In one embodiment, the predetermined amount is substantially equivalent to the duration of the media represented by an integer number of data elements. In one exemplary embodiment, the predetermined amount is substantially equivalent to the duration of the media represented by one data element.

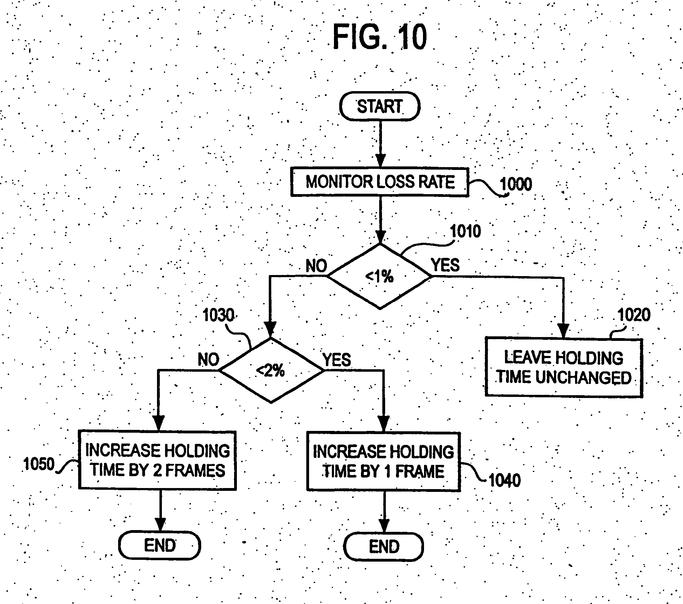

In one illustrative embodiment, if the loss rate is greater than or equal to a second threshold, that is greater than the first threshold, the target hold time is increased by a second amount that is greater than the first predetermined amount. In one embodiment, the target hold time is increased by a first amount, substantially equivalent to the duration of the media represented by one data element, if the data loss rate is greater than or equal to a first threshold but less than a second threshold. The target hold time is increased by a second amount, substantially equivalent to the duration of the media represented by two data elements, if the data loss rate is greater than or equal to the second threshold. FIG. 10 is a flow chart representing a method of adjusting the data element holding time based on the data element loss rate according to an illustrative embodiment of the present invention. At step 1000, the data element loss rate is monitored. If the data element loss rate is less than 1% 1010, the target holding time is left unchanged, as shown at step 1020. If the loss rate is greater than or equal to 1%, it is determined whether the loss rate is less than 2%. If the loss rate is less than 2% (but greater than or equal to 1%), the target holding time is increased by one data element (such as a frame), as shown at step 1040. If the loss rate is greater than or equal to 2%, the target holding time is increased by two data elements, as shown at step 1050. In other words, for example, a higher time period is used if the loss rate is "high" in this embodiment. In an illustrative embodiment, the process embodied in FIG. 10 is repeated indefinitely as the loss rate is continuously monitored.

In an exemplary embodiment, if the estimated frame loss rate is high (for example, 4% lost frames) and there are currently four 5 msec G.711 frames per superpacket (20 msec superpackets with a 5 msec encoder interval), then the end-to-end delay is increased by 10 msec. This makes it very likely that 10 msec of future data will be available when a single frame loss occurs. The first 10 msec of the lost superpacket can be estimated from past decoded speech, and the last 10 msec of the lost superpacket can be estimated by both the past speech and at least 20 msec of the future speech.

In an alternative embodiment wherein the superpacketization interval is very large in comparison to the encoder interval, if the loss rate is less than 2% but greater than or equal to 1%, the target holding time is increased by two frames, and if the loss rate is greater than or equal to 2%, the target holding time is increased by more than two frames. As another exemplary embodiment, consider a G.729 decoding scheme at 8 kb/s with an 80 msec superpacketization interval, a 10 msec encoder interval, and a 3% frame loss rate. Due to the large superpackets, the controller increases the end-to-end delay by 40 msec (4 frames). This makes it likely that when a superpacket is lost the next superpacket will be available after 40 msec of frame loss recovery is performed for the lost superpacket. For the remaining 40 msec of the lost superpacket, the lost frame recovery engine 94 can use both future and past information to estimate the lost frames.

In still another illustrative embodiment of the present invention, if the loss rate is lower than a first threshold, the target holding time is increased. If the loss rate is greater than or equal to the first threshold but less than a second threshold, the target holding time is maintained at a present duration. If the loss rate is greater than or equal to the second threshold, the target holding time is increased.

In summary, an illustrative embodiment of the present invention is directed to a system for estimating an unreceived data element of a transmitted digital media data stream made up of a stream of data elements. The system includes a jitter buffer 86, 90 and a lost data element recovery mechanism 94. The jitter buffer 86, 90 receives a transmitted digital media data stream and holds each received data element until a prescribed playout deadline, at which time the data element is released for playout. The lost data element recovery mechanism 94 estimates a parameter of an unreceived data element based on a received subsequent data element that follows the unreceived data element in the data stream. In one embodiment, the system also includes a controller that monitors a loss rate at which data elements in the data stream are not received at the jitter buffer by their respective playout deadlines. The controller adjusts a time interval extending from the time a data element is sent by a transmitting end to the playout deadline based.

Using both past and future data to estimate lost data elements, better media quality at times of high data element loss rates can be achieved. Increasing the jitter buffer hold times increases the likelihood that future packets will be available for backward prediction.

Although a preferred embodiment of the present invention has been described, it should not be construed to limit the scope of the appended claims. For example, the present invention is applicable to any real-time media, such as audio and video, in addition to the voice media illustratively described herein. Also, the invention is applicable to the recovery of any type of lost data elements, such as packets, in addition to the application to late frames described herein. Those skilled in the art will understand that various modifications may be made to the described embodiment. Moreover, to those skilled in the various arts, the invention itself herein will suggest solutions to other tasks and adaptations for other applications. It is therefore desired that the present embodiments be considered in all respects as illustrative and not restrictive, reference being made to the appended claims rather than the foregoing description to indicate the scope of the invention.

## Claims

1. A method of processing a transmitted digital media data stream referred to as stream of data elements:
a. receiving (900) the stream of data elements;
b. holding (910) each data element that is received prior to an end of a respective time period in a buffer until the end of the time period, at which time the data element is released for playout, and wherein a data element is considered unreceived if not received prior to the end of said respective time period;
c. monitoring (920, 1000) a loss rate at which data elements in the data stream are not received by the end of their respective time periods; and
d. adjusting (930, 1040, 1050) the duration of the respective time periods based upon the loss rate;
the method further comprising:
estimating at least one parameter of an unreceived data element, wherein the estimating step comprises:
receiving (800) a subsequent data element that follows the unreceived data element in the data stream; and **characterized by**
estimating (810) the at the least one parameter of the unreceived data element based on the received subsequent data element, but not on data elements preceding the unreceived data element.

2. The method of claim 1 wherein step c. comprises monitoring (920) a loss rate over a prescribed interval at which data elements in the data stream are not received by the end of their respective time periods.

3. The method of claim 1 wherein adjusting step d. comprises increasing (1040, 1050) the duration of the time period if the loss rate is above a first threshold.

4. The method of claim 1 wherein adjusting step d. comprises:
d. i. if the loss rate is lower than a first threshold (1010), maintaining (1020) the duration of the time period at a present value; and
d.ii. if the loss rate is greater than the first threshold (1010), increasing (1050, 1060) the duration of the time period by a first amount.

5. The method of claim 4 wherein step d. ii. comprises increasing (1040) the duration of the time period by a first amount that is substantially equivalent to a duration of the media represented by one data element.

6. The method of claim 4 wherein adjusting step d. further comprises:
d.iii. if the loss rate is greater than a second threshold (1030) that is greater than the first threshold (1010), increasing (1050) the duration of the time period by a second amount that is greater than the first amount.

7. The method of claim 6 wherein step d.ii. comprises increasing (1040) the duration of the time period by a first amount that is substantially equivalent to a duration of the media represented by one data element and wherein step d.iii. comprises increasing (1050) the duration of the time period by a second amount that is substantially equivalent to twice the duration of the media represented by one data element.

8. The method of claim 1 wherein adjusting step d. comprises:
d.i. if the loss rate is lower than a first threshold, decreasing the duration of the time period;
d.ii. if the loss rate is greater than the first threshold but less than a second threshold, maintaining the duration of the time period at a present value; and
d.iii. if the loss rate is greater than the second threshold, increasing the duration of the time period.

9. The method of claim 1 wherein the data elements are frames of encoded data.

10. The method of claim 1 wherein the time period begins for each transmitted data element when the data element is sent by a transmitting end.

11. A system of estimating an unreceived data element of a transmitted digital media data stream referred to as stream of data elements comprising:
a jitter buffer adapted to receive the stream of data elements and to hold each received data element until an end of a respective time period, at which time the data element is released for playout, and wherein a data element is considered unreceived if not received prior to the end of said respective time period;
and a controller adapted to monitor a loss rate at which data elements in the data stream are not received at the jitter buffer by the end of their respective time periods and to adjust the duration of the respective time periods based upon the loss rate,
**characterized in that** the system further comprises
a lost data element recovery mechanism (94) adapted to estimate at least one parameter of an unreceived data element based on a received subsequent data element, but not on data elements preceding the unreceived data element.

12. The system of claim 11 wherein the controller is adapted to increase the duration of the time period if the loss rate is above a first threshold.

13. The system of claim 12 wherein the controller is adapted to increase the duration of the time period by an amount that is substantially equivalent to a duration of the media represented by an integer number of data elements if the loss rate is above the first threshold.

14. The system of claim 12 wherein the controller is further adapted to decrease the duration of the time period if the loss rate is below a second threshold that is lower than the first threshold.

15. The system of claim 11 wherein the time period begins for each transmitted data element when the data element is sent by a transmitting end.

16. The system of claim 11 further comprising:
a decoder adapted to receive data elements from the jitter buffer and to decode the data elements to produce decoded data elements representing media samples.

17. The system of claim 11 wherein the media data stream is an encoded audio data stream comprising a plurality of audio data elements, each representing a portion of a transmitted audio session.

18. The system of claim 11 wherein the data elements are frames of encoded data.

## Patentansprüche

1. Verfahren zum Verarbeiten eines gesendeten digitalen Mediendatenstroms, der Strom von Datenelementen genannt wird:
a. Empfangen (900) des Stroms von Datenelementen;
b. Halten (910) jedes Datenelement, das empfangen wird, vor dem Ende einer entsprechenden Zeitspanne in einem Puffer bis zum Ende der Zeitspanne, wenn das Datenelement zum Ausspielen freigegeben wird, und wobei angenommen wird, dass ein Datenelement nicht empfangen wurde, wenn es nicht vor dem Ende der entsprechenden Zeitspanne empfangen worden ist;
c. Überwachen (920, 1000) der Verlustrate, mit der Datenelemente in dem Datenstrom nicht bis zum Ende der entsprechenden Zeitspannen empfangen worden sind; und
d. Einstellen (930, 1040, 1050) der Dauer der entsprechenden Zeitspannen basierend auf der Verlustrate;
wobei das Verfahren des Weiteren umfasst:
Schätzen wenigstens eines Parameters eines nicht empfangenen Datenelements, wobei der Schritt des Schätzens umfasst:
Empfangen (800) eines Folge-Datenelements, das dem nicht empfangenen Datenelement in dem Datenstrom folgt; und
**gekennzeichnet durch**
Schätzen (810) des wenigstens einen Parameters des nicht empfangenen Datenelements basierend auf dem empfangenen Folge-Datenelement, jedoch nicht auf Datenelementen, die dem nicht empfangenen Datenelement vorangehen.

2. Verfahren nach Anspruch 1, wobei Schritt c. das Überwachen (920) der Verlustrate über ein vorgegebenes Intervall umfasst, in dem Datenelemente in dem Datenstrom nicht bis zum Ende ihrer jeweiligen Zeitspannen empfangen worden sind.

3. Verfahren nach Anspruch 1, wobei der Schritt d. des Einstellens das Verlängern (1040, 1050) der Dauer der Zeitspanne umfasst, wenn die Verlustrate über einem ersten Schwellenwert liegt.

4. Verfahren nach Anspruch 1, wobei der Schritt d. des Einstellens umfasst:
d. i. wenn die Verlustrate kleiner ist, als ein erster Schwellenwert (1010), Aufrechterhalten (1020) der Dauer der Zeitspanne auf dem aktuellen Wert; und
d. ii. wenn die Verlustrate größer ist, als der erste Schwellenwert (1010), Verlängern (1050, 1060) der Dauer der Zeitspanne um einen ersten Betrag.

5. Verfahren nach Anspruch 4, wobei Schritt d. ii. das Verlängern (1040) der Dauer der Zeitspanne um einen ersten Betrag umfasst, der im Wesentlichen gleich der Dauer der Medien ist, die durch ein Datenelement repräsentiert werden.

6. Verfahren nach Anspruch 4, wobei der Schritt d. des Einstellens des Weiteren umfasst:
d. iii. wenn die Verlustrate größer ist, als ein zweiter Schwellenwert (1030), der größer ist, als der erste Schwellenwert (1010), Verlängern (1050) der Dauer der Zeitspanne um einen zweiten Betrag, der größer ist, als der erste Betrag.

7. Verfahren nach Anspruch 6, wobei Schritt d. ii. das Verlängern (1040) der Dauer der Zeitspanne um einen ersten Betrag umfasst, der im Wesentlichen äquivalent zu der Dauer der Medien ist, die von einem Datenelement repräsentiert werden, und wobei Schritt d. iii. das Verlängern (1050) der Dauer der Zeitspanne um einen zweiten Betrag umfast, der im Wesentlichen äquivalent zu dem Doppelten der Dauer der Medien ist, die von einem Datenelement repräsentiert werden.

8. Verfahren nach Anspruch 1, wobei Schritt d. des Einstellens umfasst:
d. i. wenn die Verlustrate kleiner ist, als ein erster Schwellenwert, Verringern der Dauer der Zeitspanne;
d. ii. wenn die Verlustrate größer ist, als der erste Schwellenwert, aber kleiner, als ein zweiter Schwellenwert, Aufrechterhalten der Dauer der Zeitspanne auf dem aktuellen Wert; und
d. iii. wenn die Verlustrate größer ist, als der zweite Schwellenwert, Verlängern der Dauer der Zeitspanne.

9. Verfahren nach Anspruch 1, wobei die Datenelemente Frames codierter Daten sind.

10. Verfahren nach Anspruch 1, wobei die Zeitspanne für jedes gesendete Datenelement beginnt, wenn das Datenelement von einer Sendeseite gesendet wird.

11. System zum Schätzen eines nicht empfangenen Datenelements eines gesendeten digitalen Mediendatenstroms, der Strom von Datenelementen genannt wird, wobei das System aufweist:
einen Jitter-Puffer, der so ausgelegt ist, dass er den Strom von Datenelementen empfängt und jedes empfangene Datenelement hält bis zum Ende einer entsprechenden Zeitspanne, wenn das Datenelement zum Ausspielen freigegeben wird, und wobei angenommen wird, dass ein Datenelement nicht empfangen wurde, wenn es nicht vor dem Ende der entsprechenden Zeitspanne empfangen worden ist;
und einen Controller, der so ausgelegt ist, dass er die Verlustrate, mit der Datenelemente in dem Datenstrom nicht bis zum Ende der entsprechenden Zeitspannen an dem Jitter-Puffer empfangen worden sind, überwacht und die Dauer der entsprechenden Zeitspannen basierend auf der Verlustrate einstellt,
**dadurch gekennzeichnet, dass** das System des Weiteren aufweist:
einen Wiederherstellungsmechanismus (94) für verlorene Datenelemente, der so ausgelegt ist, dass er wenigstens einen Parameter eines nicht empfangenen Datenelements basierend auf einem empfangenen Folge-Datenelement schätzt, jedoch nicht auf Datenelementen, die dem nicht empfangenen Datenelement vorangehen.

12. System nach Anspruch 11, wobei der Controller so ausgelegt ist, dass er die Dauer der Zeitspanne verlängert, wenn die Verlustrate über einem ersten Schwellenwert liegt.

13. System nach Anspruch 12, wobei der Controller so ausgelegt ist, dass er die Dauer der Zeitspanne um einen Betrag verlängert, der im Wesentlichen äquivalent zu der Dauer der Medien ist, die von einer ganzen Zahl von Datenelementen repräsentiert werden, wenn die Verlustrate über dem ersten Schwellenwert liegt.

14. System nach Anspruch 12, wobei der Controller des Weiteren so ausgelegt ist, dass er die Dauer der Zeitspanne verkürzt, wenn die Verlustrate unter einem zweiten Schwellenwert liegt, der kleiner ist, als der erste Schwellenwert.

15. System nach Anspruch 11, wobei die Zeitspanne für jedes gesendete Datenelement beginnt, wenn das Datenelement von einer Sendeseite gesendet wird.

16. System nach Anspruch 11, das des Weiteren aufweist:
einen Decoder, der so ausgelegt ist, dass er Datenelemente von dem Jitter-Puffer empfängt und die Datenelemente decodiert, um decodierte Datenelemente zu erzeugen, die Medien-Samples repräsentieren.

17. System nach Anspruch 11, wobei der Mediendatenstrom ein codierter Audiodatenstrom ist, der eine Vielzahl von Audiodatenelementen aufweist, die jeweils einen Teil einer gesendeten Audiositzung repräsentieren.

18. System nach Anspruch 11, wobei die Datenelemente Frames codierter Daten sind.

## Revendications

1. Procédé de traitement d'un flux de données multimédia numériques transmis dénommé flux d'éléments de données, comprenant :
a. la réception (900) du flux d'éléments de données ;
b. la retenue (910) de chaque élément de données qui est reçu avant la fin d'un délai respectif dans un tampon jusqu'à la fin dudit délai, l'élément de données étant alors libéré pour être lu, et dans lequel un élément de données est considéré comme non reçu s'il n'a pas été reçu avant la fin dudit délai respectif ;
c. la surveillance (920, 1000) d'un taux de perte auquel des éléments de données du flux de données ne sont pas reçus avant la fin de leurs délais respectifs ; et
d. l'ajustement (930, 1040, 1050) de la durée des délais respectifs en fonction du taux de perte ;
le procédé comprenant en outre :
l'estimation d'au moins un paramètre d'un élément de données non reçu, dans laquelle l'étape d'estimation comprend :
la réception (800) d'un élément de données ultérieur qui suit l'élément de données non reçu dans le flux de données ; et **caractérisé en ce qu'**il comprend
l'estimation (810) de l'au moins un paramètre de l'élément de données non reçu en fonction de l'élément de données ultérieur reçu, mais non des éléments de données qui précèdent l'élément de données non reçu.

2. Procédé selon la revendication 1, dans lequel l'étape c. consiste à surveiller (920) un taux de perte sur un intervalle indiqué auquel des éléments de données du flux de données ne sont pas reçus avant la fin de leurs délais respectifs.

3. Procédé selon la revendication 1, dans lequel l'étape d'ajustement d. consiste à augmenter (1040, 1050) la durée du délai si le taux de perte est supérieur à un premier seuil.

4. Procédé selon la revendication 1, dans lequel l'étape d'ajustement d. consiste :
d.i. si le taux de perte est inférieur à un premier seuil (1010), à maintenir (1020) la durée du délai à une valeur actuelle ; et
d.ii. si le taux de perte est supérieur au premier seuil (1010), à augmenter (1050, 1060) la durée du délai d'une première quantité.

5. Procédé selon la revendication 4, dans lequel l'étape d.ii. consiste à augmenter (1040) la durée du délai d'une première quantité qui est sensiblement équivalente à la durée du média représenté par un élément de données.

6. Procédé selon la revendication 4, dans lequel l'étape d'ajustement d. consiste en outre :
d.iii. si le taux de perte est supérieur à un second seuil (1030) qui est supérieur au premier seuil (1010), à augmenter (1050) la durée du délai d'une seconde quantité qui est supérieure à la première quantité.

7. Procédé selon la revendication 6, dans lequel l'étape d.ii. consiste à augmenter (1040) la durée du délai d'une première quantité qui est sensiblement équivalente à la durée du média représenté par un élément de données et dans lequel l'étape d.iii. consiste à augmenter (1050) la durée du délai d'une seconde quantité qui est sensiblement équivalente à deux fois la durée du média représenté par un élément de données.

8. Procédé selon la revendication 1, dans lequel l'étape d'ajustement d. consiste :
d.i. si le taux de perte est inférieur à un premier seuil, à diminuer la durée du délai ;
d.ii. si le taux de perte est supérieur au premier seuil mais inférieur à un second seuil, à maintenir la durée du délai à une valeur actuelle ; et
d.iii. si le taux de perte est supérieur au second seuil, à augmenter la durée du délai.

9. Procédé selon la revendication 1, dans lequel les éléments de données sont des trames de données codées.

10. Procédé selon la revendication 1, dans lequel le délai commence, pour chaque élément de données transmis, au moment où l'élément de données est envoyé par une extrémité émettrice.

11. Système d'estimation d'un élément de données non reçu d'un flux de données multimédia numériques transmis dénommé flux d'éléments de données, comprenant :
un tampon de gigue apte à recevoir le flux d'éléments de données et à retenir chaque élément de données reçu jusqu'à la fin d'un délai respectif, l'élément de données étant alors libéré pour être lu, et dans lequel un élément de données est considéré comme non reçu s'il n'a pas été reçu avant la fin dudit délai respectif ;
et un contrôleur apte à surveiller un taux de perte auquel des éléments de données du flux de données ne sont pas reçus dans le tampon de gigue avant la fin de leurs délais respectifs et à ajuster la durée des délais respectifs en fonction du taux de perte ;
**caractérisé en ce que** le système comprend en outre
un mécanisme de récupération d'éléments de données perdus (94) apte à estimer au moins un paramètre d'un élément de données non reçu en fonction d'un élément de données ultérieur reçu, mais non des éléments de données qui précèdent l'élément de données non reçu.

12. Système selon la revendication 11, dans lequel le contrôleur est apte à augmenter la durée du délai si le taux de perte est supérieur à un premier seuil.

13. Procédé selon la revendication 12, dans lequel le contrôleur est apte à augmenter la durée du délai d'une quantité qui est sensiblement équivalente à la durée du média représenté par un nombre entier d'éléments de données si le taux de perte est supérieur au premier seuil.

14. Système selon la revendication 12, dans lequel le contrôleur est apte en outre à diminuer la durée du délai si le taux de perte est inférieur à un second seuil qui est inférieur au premier seuil.

15. Système selon la revendication 11, dans lequel le délai commence, pour chaque élément de données transmis, au moment où l'élément de données est envoyé par une extrémité émettrice.

16. Système selon la revendication 11, comprenant en outre :
un décodeur apte à recevoir des éléments de données provenant du tampon de gigue et à décoder lesdits éléments de données pour produire des éléments de données décodés représentant des échantillons multimédia.

17. Système selon la revendication 11, dans lequel le flux de données multimédia est un flux de données audio codées comprenant une pluralité d'éléments de données audio, chacun représentant une partie d'une session audio transmise.

18. Système selon la revendication 11, dans lequel les éléments de données sont des trames de données codées.
